# EUROPEAN PATENT APPLICATION

(11) **EP 2 884 100 A1**
(43) Date of publication of application: **17.06.2015**
(21) Application number: 13197569.0
(22) Date of filing: 16.12.2013
(51) Int. Cl.: F03D 11/02, F16H 1/28

(54) **Planetary gear, wind generator comprising a planetary gear and use of a planetary gear**

(71) Applicant: Areva Wind GmbH, 27572 Bremerhaven (DE)
(72) Inventor: Pischel, Klaus, 27619 Schiffdorf-Spaden (DE); Meimann, Valentin, (geb. Tighelnic), Dr.Ing., 48429 Rheine (DE)
(74) Representative: Prinz & Partner mbB

(57) **Abstract**

A planetary gear, a wind generator having a planetary gear and the use of the planetary gear is provided. A planetary gear having a driving or driven wheel engaging a transmission stage having first planet gears, which are coupled to a corresponding number of second planet gears being axially displaced with respect to the first planet gears, wherein the second planet gears engage gears of at least one sun wheel coupled to a driven or driving shaft, characterized in that the second planet gears are divided into a first subset and a second subset of gears, which are arranged in two separate planes being spaced from each other in an axial direction, wherein the first planet gears of the first subset are coupled to their corresponding second planet gears using first shafts and the first planet gears of the second subset are coupled to their corresponding second planet gears using second shafts, wherein the first shafts have a first length and the second shafts have a second length, and wherein the first length differs from the second length.

## Description

### FIELD OF THE INVENTION

The invention relates to planetary gear. Furthermore, the invention relates to wind generator, in particular an offshore wind generator, comprising a planetary gear. Finally, the invention relates to the use of a planetary gear.

### BACKGROUND

Planetary gears are used in various technical fields, in particular for transmission of high torques. This type of gear offers a high gear transmission ratio at a relatively compact size. For example in wind generators, where the required construction space is always an issue, planetary gears are often applied for transmission of the torque from the main shaft carrying the rotor to a driven shaft, which is coupled to the electric generator for production of electricity. High gear transmission ratios are typically provided by multistage planetary gears. For example, a two-staged power split planetary gear for a wind generator is disclosed in document DE 10 2010 041 474 A. The number of gear transmission stages, however, increases a length of the planetary gear. In principle, this contradicts the desired compact size.

To distribute the high torque to a number of individual tooth contacts, a high number of planet gears are typically applied. This, however, increases the size of the planet gear. In addition to this, the construction space around the circumference of the drive gear is limited, thereby limiting the number of applicable planet gears.

The technical demand for high torque strength and high gear transmission ratios typically renders the planetary gear spacious and heavy. For application in wind generators, in particular in offshore wind generators, size and weight of the planetary gear are, however, crucial. It is therefore desirable to have a compact, light-weight gear even though it offers the capability of bearing high torques while simultaneously having a high gear transmission ratio.

### SUMMARY

It is an object of the invention to provide a planetary gear, a wind generator having a planetary gear and the use of a planetary gear, wherein these should be enhanced with respect to the technical deficiencies, which are known in the prior art.

In one aspect of the invention, a planetary gear having a drive wheel or driven wheel engaging a transmission stage is provided. The transmission stage comprises first planet gears, which are coupled to a corresponding number of second planet gears. The second planet gears are axially displaced with respect to the first planet gears. The second planet gears of the gear stage engage gears of at least one sun wheel, which is coupled to a driven shaft or driving shaft. There can also be more than one sun wheel. The second planet gears are divided into two subsets of gears. These are arranged in two separate planes, which are spaced from each other in an axial direction of the planetary gear. The second planet gears of the first subset are coupled to their corresponding first planet gears (meshing with the drive wheel) using first shafts. Similarly, the second planet gears of the second subset are coupled to their corresponding first planet gears using second shafts. The first shafts have a first length and the second shafts have a second length. These lengths are measured in an axial direction of the gear. The first length can be different from the second length. The first length and the second length are measured in an axial direction of the gear. In the context of this specification the driving side and the driven side of the planetary gear can be exchanged. This means that the driving or drive wheel can be the driven wheel and the driven shaft and can be the driving shaft.

In an aspect of the invention, the second length can be greater than the first length.

Advantageously, the two separate planes, which accommodate the second planet gears of the first and second subset, respectively, are both arranged on a same side of the drive wheel. In other words, both, the first shafts and the second shafts project in a same axial direction towards the second planet gears, when starting at the first planet gears.

The gear design having two planes for accommodation of the second planet gears is advantageous in that, a high number of planetary gears can be arranged around the circumference of the drive wheel, even tough the available construction space is limited. Due to the arrangement in two separate levels, the second gears can overlap, when observed in a front view along a main axis of the gear. In other words, the second gears are staggered along the central axis of the gear, i. e. in an axial direction. At the same time, the planetary gear is compact and relatively large second planet gears can be applied. This enables the gear to have a high gear transmission ratio. When compared to conventional planetary gears, the number of gear stages can be reduced. This simplifies the design of the planetary gear and reduces its weight. In addition to this, input power can be split to a comparably high number of planet gears, which are arranged around the drive wheel. Consequently, the planetary gear is capable of transmitting high torques because the applied force is distributed to a considerable number of tooth contacts. The compact and light-weight planetary gear is particularly advantageous for application in offshore wind generators.

In an aspect of the invention, the first shafts can have a first torsional strength. The second shafts can have a second torsional strength. The different torsional strengths of the first shafts and the second shafts can be due to their different length (first and second length).

In an embodiment, the first and the second torsional strength can differ from each other. For example, the first shafts can have a higher torsional strength than the second shafts.

In another embodiment, the first shafts can have a first torsional strength and the second shafts can have a second torsional strength which is substantially equal to the first torsional strength. In other words, the first shafts and the second shafts can have substantially the same torsional strength (torsional stiffness).

Advantageously, the first shafts and the second shafts can have a different diameter in order to compensate a different torsional strength of the first shafts compared with the second shafts due to the different length of the first shafts and the second shafts.

Advantageously, the second planet gears and the corresponding gears of the sun wheel are helical gears. The direction of a pitch of the helical second planet gears of the first subset is opposite to a direction of the pitch of the helical second planet gears of the second subset. For example, the first subset comprises right-hand gears and the second subset has left-hand gears. It is understood, the direction of the pitch can also be vice versa. In other words, the first subset of gears has left-hand gears and the second subset has right-hand gears. The oppositely pitched helical gears allow the sun wheel to be self-centering. In particular, the sun wheel comprises opposite helical gears, which mesh with the second planet gears of the first subset and the second subset, respectively. Advantageously, the planetary gear according to this embodiment of the invention can dispense with thrust bearings for the sun wheel.

In another advantageous embodiment of the invention, the inclination of the helical second planet gears of the first subset and the inclination of the helical gears of the second subset is at least substantially equal. In particular, the inclination of the gears of the two subsets can be equal. This, however, only applies to the value of the inclination - not to the direction. In other words, a value, for example a pitch or tilt angle, of the helical gears is least substantially equal with respect to its value. The tilt angles of the helical gears can be configured in that sufficient axial forces are generated so as to allow the self centering effect of the sun wheel.

In an aspect of the invention, a clutch gearing can be arranged between the sun wheel and the driven or driving shaft. This clutch gearing or gear can be positioned as a function of the first lengths of the first shafts and the second lengths of the second shafts. The clutch gearing or clutch gear can also be positioned as a function of the first torsional strength of the first shafts and the second torsional strength of the second shafts. Accordingly, different torsional strengths of the first and second shafts can be compensated by positioning the clutch gearing closer towards the plane of second planetary gears having the lower torsional strength (due to the longer shafts). The connection between the sun wheel and the driven shaft is then stiffer on this side of the sun wheel. Accordingly, the different cinematic paths through the first shafts and the second shafts are taken into account and the first shafts, the second shafts and the position of the clutch gearing are arranged and dimensioned accordingly. Given the properties of the first shafts (in terms of length and/or diameter and/or material and/or construction) and the properties of the second shafts (in terms of length and/or diameter and/or material and/or construction) the clutch gearing is positioned along relative to the sun wheel and the driven (or driving) shaft.

In an embodiment, in which the torsional strength of the first and the second shafts is substantially the same, the clutch gearing can be arranged in the middle between the gearings of the sun wheel. With respect to the two planes of the second planetary gears, the clutch gearing may be positioned substantially in a plane in the middle of the two planes.

In another embodiment, in which the torsional strength of the first and second shafts is different, the clutch gearing can be arranged offset with respect to a center between the gearings of the sun wheel (or distanced from the above defined middle plane). In other words, the clutch gearing between the sun wheel and the driven shaft can be arranged offset with respect to a center between the gearings, which mesh with the planet gears of the first and the second subset, respectively. The off-center arrangement of the clutch gearing can at least partially compensate the different torsional strengths of the first and second shafts. In particular, the sun wheel can be designed self-centering although the first and second subsets of planet gears are coupled via shafts having different torsional strengths.

In still another embodiment of the invention, the planetary gear has only one single gear transmission stage. This renders the planetary gear particularly compact.

In another advantageous embodiment of the invention, the drive wheel comprises an internal gear. In particular, an outer circumference of the second planet gears partially projects beyond an external level of the driving gear, in a radial direction. The planet gears can extend beyond an outer circumference of the drive wheel. The second planet gears are designed to have a comparably high radius thereby providing a high gear transmission ratio. Because the second planet gears are arranged in separate planes or levels, this does not question the compact design of the planetary gear.

In another aspect of the invention, a wind generator is provided, which comprises a planetary gear according to aspects of the invention. In particular, this is an offshore wind generator. Advantageously, the wind generator comprises a compact and light-weight planetary gear, which is capable of transmitting high torques at high gear transmission ratio. The compact design and the reduced weight render the wind generator more economic. For example, a reduction in size allows the nacelle to be designed more compact and less spacious. This entails that also the supporting structure, for example a tower and a foundation, can be designed to have lower load bearing capabilities. This overall reduction of the mass and weight of the wind generator, in particular for offshore wind generators, renders the transport to the construction site more economic. Similar advantages, also apply to onshore wind generators.

The invention also provides a drive train of a wind generator comprising a planetary gear according to the aspects and/or embodiments of the invention.

In an advantageous embodiment of the invention, the planetary gear forms part of a power train of the wind generator. In particular, a main drive shaft, which is coupled to a rotor of the wind generator, is coupled to the drive wheel of the planetary gear. The driven shaft can be coupled to an electric generator for production of electricity.

In still another aspect of the invention, an advantageous use of a planetary gear according to aspects of the invention is provided. The planetary gear can advantageously be used in a wind generator, in particular in an offshore wind generator. The invention therefore also provides a wind generator, an offshore wind generator and a wind power park comprising the planetary gear according to the aspects and embodiments of the invention.

Similar advantages, which have been mentioned with respect to the planetary gear and with respect to the wind generator, also apply to the use of the planetary gear in a wind generator in a same or similar way.

### BRIEF DESCRIPTION OF DRAWINGS

Further aspects and features of the invention ensue from the following description of preferred embodiments of the invention with reference to the accompanying drawings, wherein
FIG.1 shows a simplified offshore wind generator, according to an embodiment of the invention,
FIG. 2 is a simplified schematic drawing showing a longitudinal cut of a planetary gear along its main axis, according to an embodiment of the invention,
FIG. 3 is a simplified front view along the main axis of the planetary gear of FIG. 2, and
FIG. 4 is a simplified schematic drawing showing a longitudinal cut of a planetary gear along its main axis according to another embodiment of the invention.

### DETAILED DESCRIPTION OF EXAMPLE EMBODIMENTS

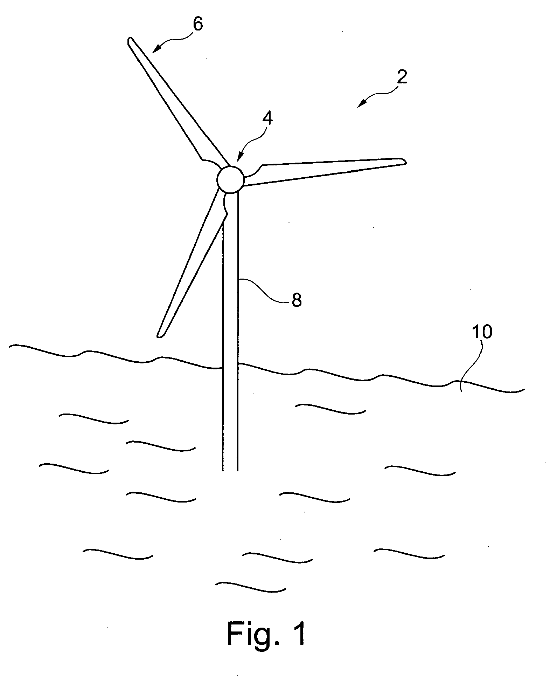

FIG. 1 is a simplified perspective view of a wind generator 2. By way of an example, the wind generator 2 is an offshore wind generator. It comprises a rotor hub 4 carrying the rotor blades 6. A supporting structure 8, for example a tower, carries a nacelle (not visible) and is based on a suitable underwater foundation in the sea 10.

A main shaft of the wind generator 2, which is driven by the rotor hub 4, is coupled to a planetary gear, which can be a step-up or a step-down gear. This is to couple the torque, which is applied on the main shaft, to a driven shaft, which is further coupled to an electric generator for the production of electricity.

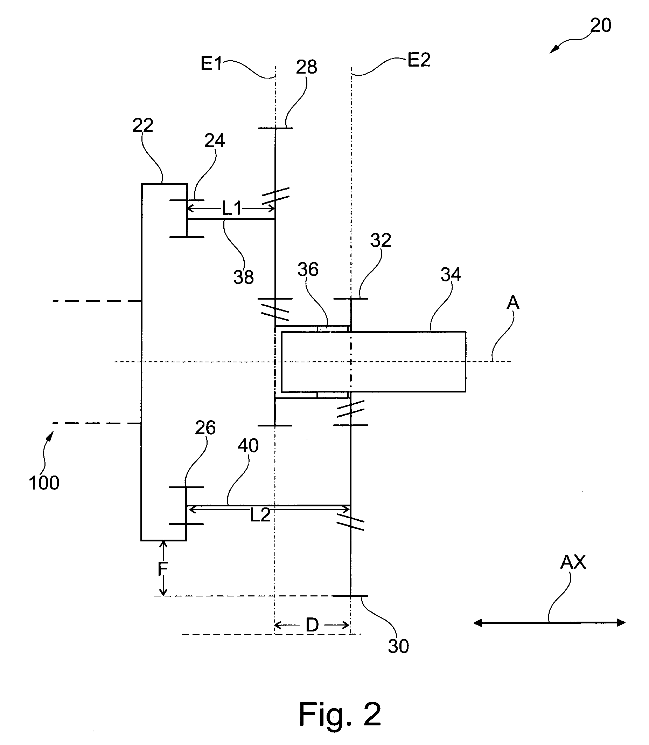

According to an embodiment of the invention, the wind generator 2 is equipped with a planetary gear 20, which is shown in FIG. 2. In the figure, there is a simplified drawing showing the planetary gear 20 in a longitudinal cut along a main axis A. The planetary gear 20, according to this embodiment of the invention, comprises a drive wheel 22 having an internal gear, which engages with a number of first planet gears 24, 26. The drive wheel 22 can be coupled to the main shaft of the wind generator, which is driven by the rotor. A shaft 100 can be coupled to the drive or driven wheel as indicated by dashed lines.

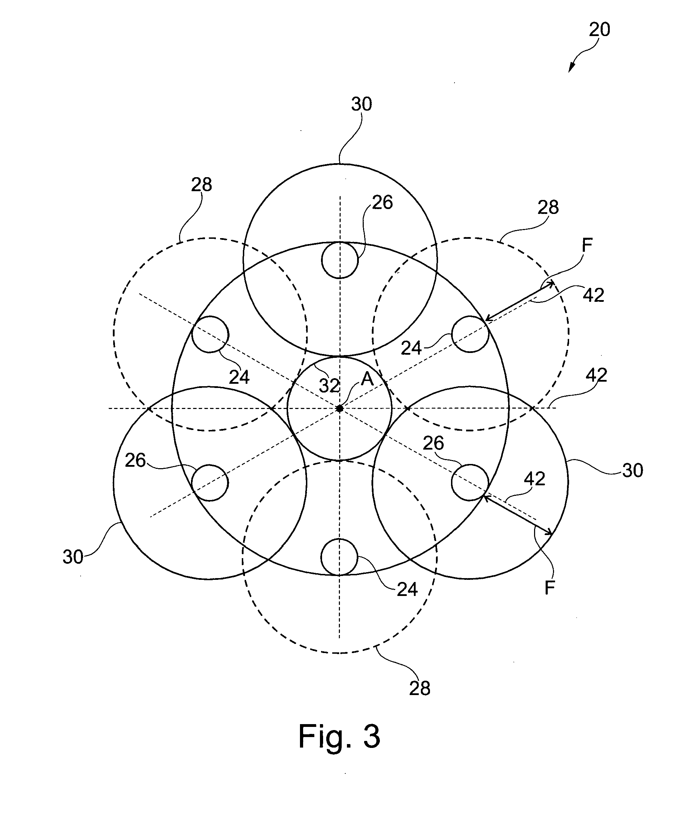

By way of an example, the planetary gear 20 comprises six first planet gears 24, 26. This is illustrated in the simplified front view of FIG. 3. A direction of the view is parallel to the main axis A. Each first planet gear 24, 26 is coupled to a second planet gear 28, 30, which is axially displaced with respect to the corresponding first planet gear 24, 26. For two sets of gears having the reference numerals 24, 28 and 26, 30, this is illustrated in FIG. 2.

In other words, there is a distance between the first planet gears 24, 26 and the second planet gears 28, 30 in an axial direction AX. The second planet gears 28, 30 engage with a sun wheel 32, which is coupled to a driven shaft 34 via a clutch gearing 36. The driven shaft 34 can be coupled to an electric generator for production of electricity in a wind generator 2.

The second planet gears 28, 30 are divided into a first subset of gears and a second subset of gears. The second planet gears having the reference numeral 28 form the first subset. The second planet gears, which are given the reference numeral 30, form the second subset. The first subset of gears 28 is arranged in a first plane E1. This is distanced from a second plane E2, which accommodates the second subset of gears 30. The two planes E1, E2 are axially spaced by a distance D, which projects in an axial direction AX.

In the simplified front view of FIG. 3, the second planetary gears 28, which are arranged in the first plane E1 are drawn in dashed lines. The second planet gears 30, which form the second subset, are drawn in solid lines. This indicates that the planet gears 28, 30 are staggered along the axial direction AX, wherein the planet gears 28 of the first subset are arranged behind the planet gears 30 of the second subset. In the simplified front view of FIG. 3, the second planet gears 28, 30 overlap each other. Due to their axial displacement, they do however not contact each other.

The first planet gears, which are given the reference numeral 24, are coupled to the second planet gears 28 of the first subset via first shafts 38. Similarly, the first planet gears denoted 26 are coupled to the second planet gears 30 of the second subset via second shafts 40. The first shafts 38 have a first length L1 and the second shafts 40 have a greater second length L2. The first and the second length L1, L2 differ by the axial displacement between the first and the second plane E1, E2, i.e. they differ by the distance D. The length difference between the first shafts 38 and the second shafts 40 entails that the first shafts 38 have a different torsional strength than the second shafts 40. In particular, the shorter first shafts 38 have a higher torsional strength than the second shafts 40.

All planet gears 24, 26, 28 and 30 are arranged on a same side of the drive wheel 22. In particular, both planes E1, E2, in which the second gears 28, 30 of the first and the second subset are arranged, respectively, are located on a same side of the drive wheel 22. Another description of this technical concept is that this first shaft 38 as well as the second shafts 40, starting from the first planet gears 24, 26, project in a same axial direction AX towards their second planet gears 28, 30.

The internal gear of the drive wheel 22 can be a straight gear. This entails that also the gears of the first planet gears 24, 26 are straight gears. According to an embodiment of the invention, the gears of the second planet gears 28, 30 and the corresponding gears of the sun wheel 32 are helically gears. A direction of the pitch of the helical second planet gears 28 of the first subset being arranged in the first plane E1 and the direction of the pitch of the helical second planet gears 30 being arranged in the second plane E2 forming the second subset of gears can be opposite. The pitch angle of the helical gears 28 of the first subset and that of the gears 30 of the second subset can be at least substantially equal with respect to the value or amount. This, however, only applies to the value of the inclination - not to the direction. In other words, a value, for example a pitch or tilt angle, of the helical gears 28, 30 is at least substantially equal with respect to its value. The tilt angles are, however, measured in opposite directions.

By way of an example only, according to the embodiment of FIG. 2, the helical second gears 28 of the first subset are right hand gears. This is indicated by the ascending double line at the second planet gear 28. The second planet gears 30 of the second subset are left hand gears. This is illustrated using the descending double line at the second planet gear 30. The gears on the sun wheel 32, which mesh with the second gears 28, 30 of the first and second subset, respectively, are oppositely cut with respect to their meshing counterpart. In the embodiment of FIG. 2, left gear of the sun wheel 32, which meshes with the second planet gear 28 of the first subset, is a left hand gear. The gear of the sun wheel 32 to the right, which meshes with the second planet gear 30 of the second subset, is a right hand gear.

It is, however, understood, that the inclinations of the helical gears can be vice versa.

The clutch gearing 36 between the sun wheel 32 and the driven shaft 34 is arranged off center with respect to the gears, which cooperate with the planet gears of the first and the second subset, which are arranged in the first and second plane E1, E2. In other words, the clutch gearing 36 is displaced with respect to a geometrical center between the two planes E1, E2. This is to compensate for the different torsional strength of the first and second shafts 38, 40.

In the embodiment of FIG. 2, the first shafts 38 having the smaller length L1 offer the higher torsional strength, when compared to the second shafts 40 having the comparably greater second length L2 (under the assumption that shafts 38 and 40 have basically the same diameter, are made of the same material and according to the same construction/architecture). The clutch gearing 36 is arranged off center in that its distance to the first plane E1 is greater than a distance to the second plane E2. Generally speaking, the clutch gearing 36 is positioned nearer to that plane accommodating the planet gears, which are coupled via the shafts having the higher torsional strength. In the embodiment of FIG. 2, this is the second plane E2.

The clutch gearing 36 is further to the right, as the stiffness of shaft 40 (due to greater length L2) is lower than the stiffness of L1 (due to shorter length L1, and if they have the same diameter). The stiffness of the sun wheel 32 from the point of entry of the torque from the shaft 40 to the point of exit of the torque through clutch gearing 36 is then higher than the stiffness from the entry point of the torque from shaft 38 to sun wheel 32 to the point of exit of the torque. Accordingly, FIG. 2 shows low stiffness of shaft 40 combined with high stiffness portion, and a high stifness shaft 38 combined with a low stiffness portion. By putting 36 further right, there is a high/low stiffness combination for both cinematic paths, either through shaft 38 (L1) or through shaft 40 (L2).

The design of the planetary gear 20 having oppositely cut helical second planet gears 28, 30 and the corresponding helical gears on the sun wheel 32, allow the sun wheel 32 to be axially freely supported. Advantageously, the planetary gear 20 can dispense with thrust bearings for the sun wheel 32. This simplifies the design.

The first and the second planet gears 24, 26 and 28, 30 are equally and symmetrically arranged around the central axis A of the planetary gear 20, according to an embodiment of the invention. This is illustrated in the front view of FIG. 3. The dashed lines 42 indicate axis of symmetry, which include equal angles between each other. The shafts 38, 40 coupling the first gears 24, 26 and the second gears 28, 30, are arranged to cut the axis of symmetry.

The planetary gear 20 according to the embodiments is particularly compact due to the staggered arrangement of the second planet gears 28, 30 in the first and the second plane E1 and E2. In addition to this, the planetary gear 20 can be designed to have a single transmission stage only. This is due to the application of comparably large second planet gears 28, 30 having a high radius. The transmission ratio of this single stage comprising the first and second planet gears 24, 26 and 28, 30 can be up to 15. The second planet gears 28, 30 project beyond an outer circumference of the drive wheel 22 by a predetermined distance F. A single step gear transmission is advantageous with respect to the overall weight of the gear, when compared to gears having multiple gear stages. Furthermore, a single step gear, in particular the planetary gear 20 having staggered second gears 28, 30, can be designed very compact so as to have a high power density.

The planetary gear 20, according to aspects of the invention, is particularly advantageous for offshore wind generators 2. This is because a reduction in weight entails that the support structure 8 of the wind generator 2 can be designed to have a lower load bearing capability. This will very likely lead to significant cost savings.

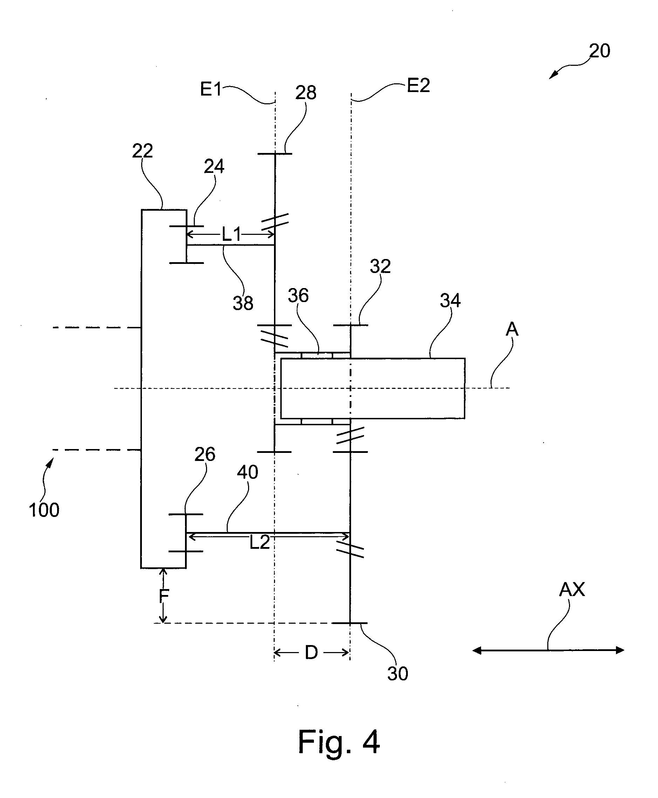

According to another embodiment of the invention, the wind generator 2 is equipped with a planetary gear 20, which is shown in FIG. 4 a simplified drawing showing the planetary gear 20 in a longitudinal cut along a main axis A. The planetary gear 20, according to this embodiment of the invention, comprises a drive wheel 22 having an internal gear, which engages with a number of first planet gears 24, 26. The drive wheel 22 can be coupled to the main shaft of the wind generator, which is driven by the rotor. A shaft 100 can be coupled to the drive or driven wheel as indicated by dashed lines.

By way of an example, the planetary gear 20 comprises six first planet gears 24, 26. This is illustrated in the simplified front view of FIG. 3, the above description of which applies also to the embodiment of FIG. 4.

A direction of the view is parallel to the main axis A. Each first planet gear 24, 26 is coupled to a second planet gear 28, 30, which is axially displaced with respect to the corresponding first planet gear 24, 26. For two sets of gears having the reference numerals 24, 28 and 26, 30, this is illustrated in FIG. 4.

In other words, there is a distance between the first planet gears 24, 26 and the second planet gears 28, 30 in an axial direction AX. The second planet gears 28, 30 engage with a sun wheel 32, which is coupled to a driven shaft 34 via a clutch gearing 36. The driven shaft 34 can be coupled to an electric generator for production of electricity in a wind generator 2.

The second planet gears 28, 30 are divided into a first subset of gears and a second subset of gears. The second planet gears having the reference numeral 28 form the first subset. The second planet gears, which are given the reference numeral 30, form the second subset. The first subset of gears 28 is arranged in a first plane E1. This plane is distanced from a second plane E2, which accommodates the second subset of gears 30. The two planes E1, E2 are axially spaced by a distance D, which projects in an axial direction AX.

The first planet gears, which are given the reference numeral 24, are coupled to the second planet gears 28 of the first subset via first shafts 38. Similarly, the first planet gears denoted 26 are coupled to the second planet gears 30 of the second subset via second shafts 40. The first shafts 38 have a first length L1 and the second shafts 40 have a greater second length L2. The first and the second length L1, L2 differ by the axial displacement between the first and the second plane E1, E2, i.e. they differ by the distance D. However, in this embodiment, the torsional strength or torsional stiffness of the shafts 38, 40 of different lengths L1 and L2 are substantially the same.

For example, the diameters of the shafts 38 and 40 can be different in order to compensate for the different torsional strength due to the different length. The diameter of the longer shaft 40 of length L2 can than be larger than the diameter of the shorter shaft 38 of length L1.

Furthermore, the material and/or the construction used for the longer shaft 40 may inherently provide a higher torsional strength or torsional stiffness than the material and/or construction used for the shorter shaft 38.

Still further, a combination of used materials, diameters or other constructional measures may be used in order to configure both shafts 38 and 40 of different length to have substantially the same torsional strength of torsional stiffness.

Still further, the cinematic path through the first shafts 38 and the second shafts 40 and the clutch gearing 36 can be taken into account and the dimensions of the shaft (for example the diameter etc.) and the position of the clutch gearing 36 may be adapted in order to compensate for different torsional strength.

Compared with FIG. 2, the clutch gear 36 can then be arranged in more centered position or even perfectly centered position as the combined stiffness of the path through shaft 40 is about the same as the combined stiffness along the path through shaft 38. In other words, the clutch gear 36 can be positioned in a plane or centered about a plane that is in the middle between the two planes E1 and E2 of the two sets of planetary gears.

Similar to the embodiment shown in FIG. 2, all planet gears 24, 26, 28 and 30 are arranged on a same side of the drive wheel 22. In particular, both planes E1, E2, in which the second gears 28, 30 of the first and the second subset are arranged, respectively, are located on a same side of the drive wheel 22. Another description of this technical concept is that this first shaft 38 as well as the second shafts 40, starting from the first planet gears 24, 26, project in a same axial direction AX towards their second planet gears 28, 30.

The internal gear of the drive wheel 22 can also be a straight gear. This entails that also the gears of the first planet gears 24, 26 are straight gears. The gears of the second planet gears 28, 30 and the corresponding gears of the sun wheel 32 can be helically gears. A direction of the pitch of the helical second planet gears 28 of the first subset being arranged in the first plane E1 and the direction of the pitch of the helical second planet gears 30 being arranged in the second plane E2 forming the second subset of gears can be opposite. The pitch angle of the helical gears 28 of the first subset and that of the gears 30 of the second subset can be at least substantially equal with respect to the value or amount. This, however, only applies to the value of the inclination - not to the direction. In other words, a value, for example a pitch or tilt angle, of the helical gears 28, 30 is at least substantially equal with respect to its value. The tilt angles are, however, measured in opposite directions.

The helical second gears 28 of the first subset can also be right hand gears. This is indicated by the ascending double line at the second planet gear 28. The second planet gears 30 of the second subset can be left hand gears. This is illustrated using the descending double line at the second planet gear 30. The gears on the sun wheel 32, which mesh with the second gears 28, 30 of the first and second subset, respectively, are oppositely cut with respect to their meshing counterpart. In the embodiment of FIG. 2, left gear of the sun wheel 32, which meshes with the second planet gear 28 of the first subset, is a left hand gear. The gear of the sun wheel 32 to the right, which meshes with the second planet gear 30 of the second subset, is a right hand gear. It is, however, understood, that the inclinations of the helical gears can be vice versa.

The clutch gearing 36 between the sun wheel 32 and the driven shaft 34 is arranged centered (with respect to the gears i.e. in the middle between the gears), which cooperate with the planet gears of the first and the second subset, which are arranged in the first and second plane E1, E2. In other words, the clutch gearing 36 is not displaced with respect to a geometrical center between the two planes E1, E2. The different torsional strengths of the first and second shafts 38, 40 are compensated by different diameters of different materials of other different constructional measures.

The design of the planetary gear 20 having oppositely cut helical second planet gears 28, 30 and the corresponding helical gears on the sun wheel 32, allow the sun wheel 32 to be axially freely supported. Advantageously, the planetary gear 20 can dispense with thrust bearings for the sun wheel 32. This simplifies the design.

In the above embodiments and aspects of the invention, a plurality of sun wheels may also be used instead of using a single sun wheel 32 with multiple gears. The concepts may also generally be applied to multiple sun wheels.

The above described embodiments and aspects can also be expanded to multiple planes of planet gears and corresponding sun wheels.

In the described embodiments, the driving side and the driven side of the planetary gear can be exchanged. This means that the driving or drive wheel can be the driven wheel and the driven shaft and can be the driving shaft.

Although the invention has been described hereinabove with reference to specific embodiments, it is not limited to these embodiments and no doubt further alternatives will occur to the skilled person that lie within the scope of the invention as claimed.

## Claims

1. A planetary gear having a driving or driven wheel engaging a transmission stage having first planet gears, which are coupled to a corresponding number of second planet gears being axially displaced with respect to the first planet gears, wherein the second planet gears engage gears of at least one sun wheel coupled to a driven or driving shaft, **characterized in that** the second planet gears are divided into a first subset and a second subset of gears, which are arranged in two separate planes being spaced from each other in an axial direction, wherein the first planet gears of the first subset are coupled to their corresponding second planet gears using first shafts and the first planet gears of the second subset are coupled to their corresponding second planet gears using second shafts, wherein the first shafts have a first length and the second shafts have a second length, and wherein the first length differs from the second length.

2. The planetary gear according to claim 1, wherein the second length is greater than the first length.

3. The planetary gear according to claim 1 or 2, wherein the first shafts have a first torsional strength and the second shafts have a second torsional strength which is different from the first torsional strength.

4. The planetary gear according to anyone of the previous claims, wherein the first shafts have a higher torsional strength than the second shafts.

5. The planetary gear according to anyone of the previous claims 1 to 3, wherein the first shafts have a first torsional strength and the second shafts have a second torsional strength which is substantially equal to the first torsional strength.

6. The planetary gear according to anyone of the previous claims, wherein the first shafts and the second shafts have a different diameter in order to compensate a different torsional strength of the first shafts compared with the second shafts due to the different length of the first shafts and the second shafts.

7. The planetary gear according to anyone of the preceding claims, wherein the two separate planes are both arranged on a same side of the drive wheel.

8. The planetary gear according to anyone of the preceding claims, wherein the second planet gears and the corresponding gears of the sun wheel are helical gears, wherein a direction of the pitch of the helical second planet gears of the first subset is opposite to direction of a pitch of the helical second planet gears of the second subset.

9. The planetary gear according to claim 8, wherein the sun wheel comprises oppositely cut helical gears, which mesh with the helical second planet gears of the first subset and the second subset, respectively, so as to provide an axially free support of the sun wheel.

10. The planetary gear according to claim 8 or 9, wherein an inclination of the helical second planet gears of the first subset and the second subset are at least substantially equal with respect to their inclination value.

11. The planetary gear according to anyone of the preceding claims, wherein a clutch gearing between the sun wheel and the driven or driving shaft is positioned as a function of the first lengths of the first shafts and the second lengths of the second shafts.

12. The planetary gear according to claim 11, wherein the clutch gearing is arranged offset with respect to a center between the gearings of the sun wheel.

13. The planetary gear according to anyone of the preceding claims, wherein the gear comprises only a single gear transmission stage.

14. The planetary gear according to anyone of the preceding claims, wherein the driving or driven wheel comprises an internal gear, and wherein in particular, an outer circumference of the second planet gears partially projects beyond a level of an outer circumference of the driving or driven wheel, in a radial direction.

15. A wind generator, in particular an offshore wind generator, comprising a planetary gear according to anyone of the preceding claims.

16. A drive train for a wind turbine comprising a planetary gear according to anyone of claims 1 to 14.

17. Use of a planetary gear according to anyone of claims 1 to 14 in a wind generator, in particular in an offshore wind generator.
